# EUROPEAN PATENT APPLICATION

(11) **EP 3 454 211 A1**
(43) Date of publication of application: **13.03.2019**
(21) Application number: 18183728.7
(22) Date of filing: 16.07.2018
(51) Int. Cl.: G06F 9/50

(54) **DYNAMIC WORKLOAD ALLOCATION**

(30) Priority: 06.09.2017 US 201762554916 P; 04.02.2018 US 201815888057
(71) Applicant: ADVA Optical Networking SE, 98617 Meiningen (DE)
(72) Inventor: Brookshire, Brian Keith, 98617 Meiningen-Dreissigacker (DE); Blackert, William Joseph, 98617 Meiningen-Dreissigacker (DE); Lynch, Robert LeRoy, 98617 Meiningen-Dreissigacker (DE)
(74) Representative: Witte, Weller & Partner Patentanwälte mbB

(57) **Abstract**

A method for allocating a fixed number of resources of a first type within a compute platform. Allocating a set of at least one resource of the first type as targeted resources, the targeted resources available for management workloads when not activated for use by productive workloads. Assigning a set of management workloads to a first targeted resource while the first targeted resource is not activated for use by productive workloads. Processing management workloads on the first targeted resource. Responding to an opportunity to use the first targeted resource for productive workloads instead of continued use for management workloads by ceasing processing of management workloads on the first targeted resource and activating the first targeted resource for use by productive workloads and making the first targeted resource unavailable for management workloads until deactivated.

## Description

This application claims priority to and incorporates by reference co-pending United States Provisional Application No. 62/554,916, filed September 6, 2017 for Dynamic Workload Allocation, and United States Patent Application No. 15/888,057, filed February 4, 2018 for Dynamic Workload Allocation.

### Background

### Field of the Disclosure.

This disclosure relates generally to cloud or virtualized computing and the assignment of resources to compute workloads.

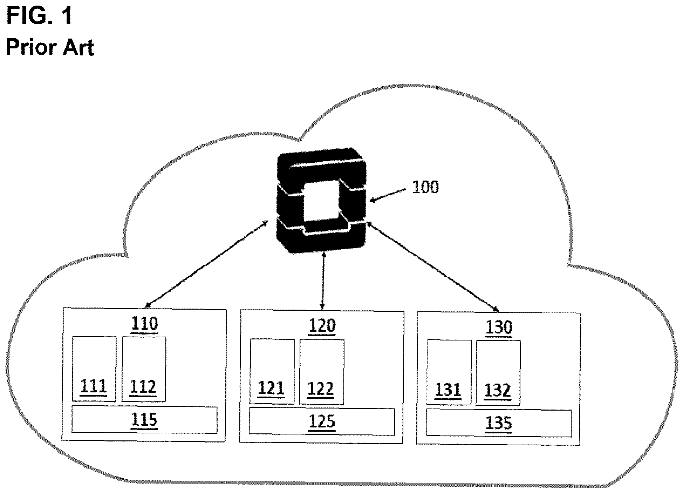

Cloud technologies are an important part of modern communications, entertainment and application hosting. Today, most of the required compute resources are located in large and centralized data centers, and are managed by software such as OpenStack running on a separate computer, as shown in **FIG. 1****.**

More specifically, **FIG. 1** shows an OpenStack controller 100 in control over three compute nodes (110, 120, and 130) which is one standard way to manage compute resources. Within compute node 110, there are two virtual network functions (VNFs) shown as elements 111 and 112. There is also network function virtualization infrastructure (NFVI) 115. Within compute node 120, there are two VNFs shown as elements 121 and 122. There is also NFVI 125. Within compute node 130, there are two VNFs shown as elements 131 and 132. There is also a NFVI 135. The number of functions shown is intended to be illustrative rather than specific to a particular use.

However, the cloud landscape is changing. New technologies such as network functions virtualization (NFV), multi-access edge computing (MEC), 5G wireless and the internet of things (IoT) are driving compute resources away from massive data centers and into the access network and out to edge sites such as telco "central offices" (local switching centers), cell towers, and customer locations. As a result, operators of edge applications are looking for smaller and more cost-effective compute platforms or servers. These smaller compute platforms introduce different requirements for providing the relevant functionality away from the data center.

The first difference is that the cost of a remote server must be lower than that of a server in a data center. This lower cost is required to ensure that the budget and business case are satisfied. The lower cost means that server resources are correspondingly smaller. As a result, there is a premium on efficient use of resources.

For purposes of this application, the term "resources" is understood to mean one or more of the physical or virtual characteristics that are limited in quantity and which must be allocated and tracked. These include, but are not limited to, CPU physical cores, CPU virtual cores, volatile memory, non-volatile storage, switching capacity, and other finite resources used by compute platforms.

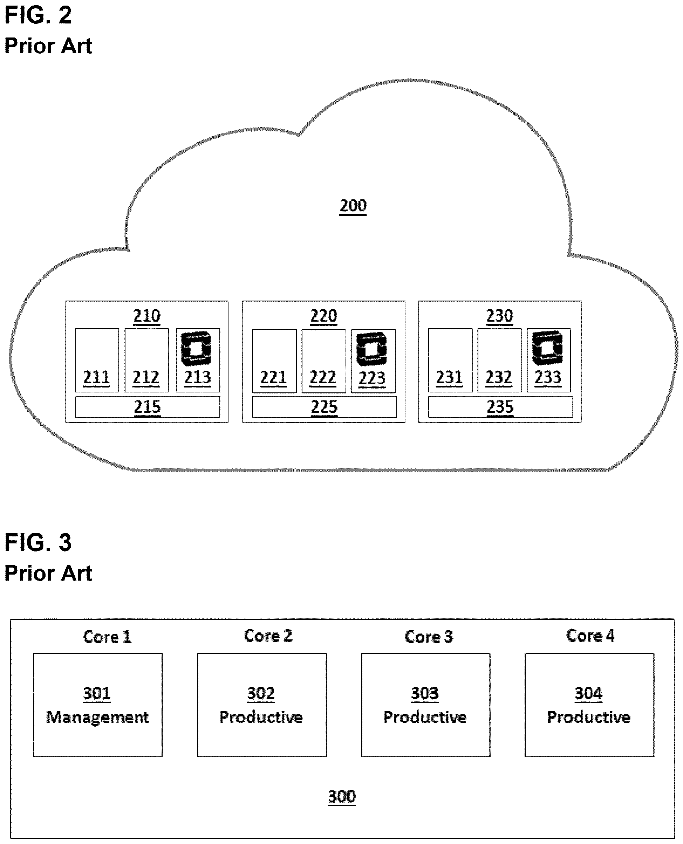

The next difference is that the edge-located server must host both productive workloads as well as management workloads, as shown in **FIG. 2. FIG. 2** has an embedded cloud 200 (sometimes called a cloud in a box). More specifically, **FIG. 2** shows three compute nodes (210, 220, and 230) supporting a set of virtual network functions (211, 212, 221, 222, 231, and 232) and a set of network function virtualizations (215, 225, and 235). Here instead of one OpenStack controller 100 as shown in **FIG. 1****,** there is an open stack controller (213, 223, and 233) within each compute node (210, 220, and 230).

For purposes of this application the term "management workload" includes standard device management and infrastructure functions such as packet switching. It may also include a software package (such as OpenStack) that is necessary for efficient operation but which operators view as overhead i.e. it does not contribute to revenue generation. As noted above, this combination of productive workloads and management workloads in a single server is referred to as a "cloud in a box" or an "embedded cloud." See "Can Cloud in a Box Address OpenStack Issues?" at https://www.linkedin.com/pulse/can-cloud-box-address-openstack-issues-prayson-pate for more information.

An example of embedded cloud is shown in **FIG. 3** which is a server 300 having four cores (301, 302, 303, and 304). **FIG. 3** shows a single server hosting both management functions (in Core 1 301) as well as workload VNFs (in cores 302, 303, and 304).

The requirements described above drive the need to minimize the resources allocated to management workloads, maximize the resources available for use for productive workloads and provide a means to allocate productive workloads the exclusive use of the resources for performance reasons.

For purposes of this application the term "productive workload" is understood as a compute task that implements a useful function. Examples of revenue-generating services or beneficial applications include: MEC, 5G wireless, and loT. These are non-limiting examples of workloads from VNFs that implement a useful and revenue-generating service. Productive workloads are in contrast to management workloads that may be considered as overhead.

These requirements limit the allocation of resources to management workloads. Taken too far, this limitation may result in an unmanageable system, where there is no ability for the system operator to control or monitor the status of the system. To complicate matters further, for NFV applications the biggest and most important management workload is VNF instantiation, which is a very dynamic workload. A server with enough resources for management in a steady-state situation may become overloaded and unmanageable under dynamically changing workloads.

Cloud in a box provides a path for efficient and scalable deployment of cloud infrastructure. Prior implementations provided the management workloads with a fixed set of resources. Examples include using a fixed Linux isolcpus kernel configuration or a fixed OpenStack configuration. This fixed allocation solution works as long as the fixed quantity of allocated resources are sufficient for the maximum dynamic workload.

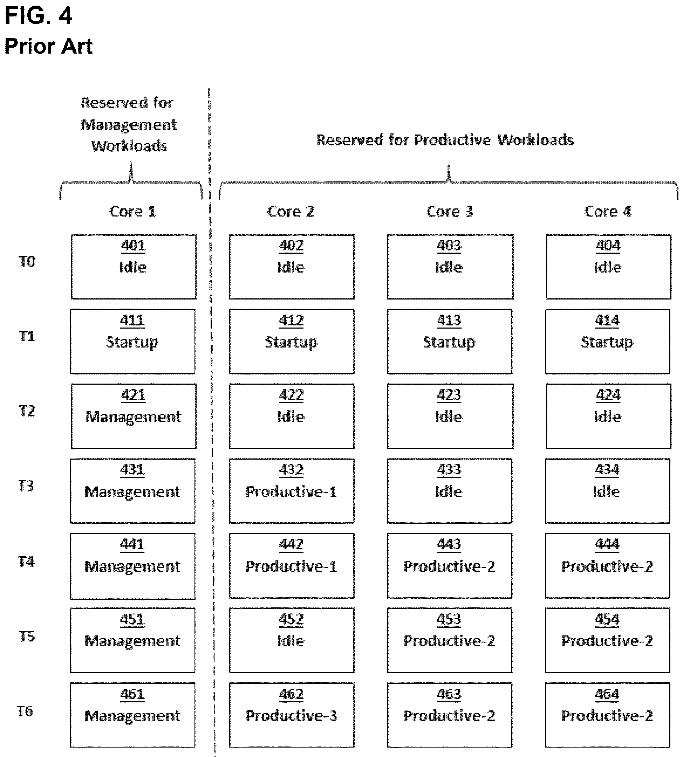

Here is an example of a sequence of events for a statically-configured system as is known in the prior-art. Please refer to **FIG. 4****,** which illustrates the allocation of one resource, CPU cores ("cores"). The allocation of other resources follows a similar model, but is omitted for clarity. See **Appendix A** for details of the configuration and commands.

### Explanation of numbering.

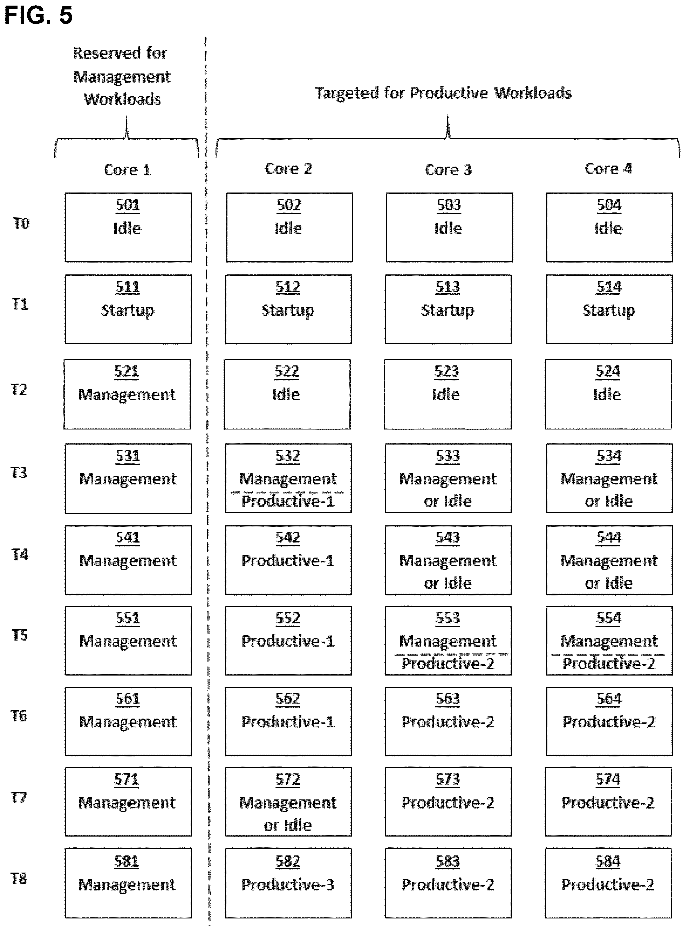

In **FIG. 4** and in **FIG. 5** below, the focus is on the allocation and use of four cores. In order to conveniently reference a particular core at a particular time and contrast that with another core, or perhaps the same core at a different time, each core/time sequence pair is given a unique number in **FIG. 4** and **FIG. 5****.** Thus, Core 2 which is one instance of a resource discussed at eight different times (T0-T8) has nine different numbers 502, 512, 522, 532, 542, 552, 562, 572, and 582 in **FIG. 5****.** Also, T0, T1, T2, et cetera are used for the convenience of this explanation and are not intended to imply time intervals of equal length.

Turning now to **FIG. 4** where the process of initializing the compute resource and handling productive workloads for several productive task is set forth.

Step 1: Operating system and management initiated.
- At time T0, 401-404 show cores 1-4 are initially idle.

Step 2: Resources are reserved.
- Linux kernel option isolcpus is used to reserve resources and prevent the operating system from allocating them.
- At time T1, 411-414 shows cores 1-4 handling startup tasks. Examples of the initial startup tasks include initial bootup, diagnostics, hardware and software initialization and startup of the operating system and management applications. While the work at time T1 could be deemed management workloads as it is not productive workloads, the startup activities are different from the later management workloads and it is helpful to simply designate them as startup.

Step 3: Operating system and management startup complete.
- At time T2 and later, the startup phase is complete. 421 shows management on Core 1 while 422-424 show cores 2-4 are idle.
- Assignment of resources is mutually exclusive between management workloads (421, 431, 441, 451, 461) and productive workloads (422-424, 432-434, 442-444, 452-454, 462-464).
- Management process takes control of resources reserved for productive workloads, which remain idle until activated for productive workloads. In some implementations this management process may be an OpenStack process that controls the allocation of the four cores.

Step 4: Activation of productive workloads.
- Activation of productive workloads is based on an internal configuration or external command
- All activation processing is performed by the management workload
- Management process instantiates productive workloads using reserved resources
- At time T3, productive workload "Productive-1" is activated (432).
- At time T4, productive workload "Productive-2" (requiring 2 CPU cores) is activated (443 and 444)

Step 5: Deactivation of productive workloads.
- Deactivation is based on an internal configuration or external command
- All deactivation processing is performed by the management workload
- At time T5 productive workload "Productive-1" is stopped (452)
- All resources and infrastructure are released and available for the next productive workload e.g. productive workload "Productive-3" at time T6 (462)
- Released resources remain idle and are not utilized by management workloads

As management workloads expand to implement an increasing number of features, the resource requirements to support management workloads continue to grow. The growth of management resource requirements leads to either:
1) inadequate resources allocated to management workloads, leading to lower system manageability and poor user experience in terms of time required to perform management operations; or
2) limits on the ability to instantiate productive workloads, limiting the utility of the deployed system by adversely affecting the amount of productive workloads that may be supported; or
3) increased system cost to add additional resources to support the larger requirements.

### Spreading the Workloads.

Another potential solution is to allow standard Linux scheduling to spread the management workload across all available resources. Each change to the resource allocation requires a context switch and/or a virtual machine (VM) migration. Within a VNF hosting environment, this is not acceptable because VNFs will typically require dedicated resources to achieve performance requirements. A context switch or VM change will stop the VNF and cause a temporary network outage that will impact the end user service.

In short, the previously unsolved problem is how to simultaneously achieve the following:
- maximize the resources available to productive workloads for economic reasons;
- statically assign resources to productive workloads for performance reasons;
- minimize the resources assigned to management workloads; and
- ensure that the management workloads have sufficient resources to handle the instantaneous load

### Summary of the Disclosure

This summary is meant to provide an introduction to the concepts that are disclosed within the specification without being an exhaustive list of the many teachings and variations upon those teachings that are provided in the extended discussion within this disclosure. Thus, the contents of this summary should not be used to limit the scope of the claims that follow.

Inventive concepts are illustrated in a series of examples, some examples showing more than one inventive concept. Individual inventive concepts can be implemented without implementing all details provided in a particular example. It is not necessary to provide examples of every possible combination of the inventive concepts provide below as one of skill in the art will recognize that inventive concepts illustrated in various examples can be combined together in order to address a specific application.

Other systems, methods, features and advantages of the disclosed teachings will be or will become apparent to one with skill in the art upon examination of the following figures and detailed description. It is intended that all such additional systems, methods, features and advantages be included within the scope of and be protected by the accompanying claims.

The present disclosure provides teachings to dynamically allocate resources over time, addressing the requirements listed above in the Background section.

### Brief Description of the Figures

The disclosure can be better understood with reference to the following figures. The components in the figures are not necessarily to scale, emphasis instead being placed upon illustrating the principles of the disclosure. Moreover, in the figures, like reference numerals designate corresponding parts throughout the different views.
**FIG. 1** depicts the standard management of compute resources in a typical data center, where management software such as OpenStack runs externally.
**FIG. 2** shows the embedded cloud or cloud in a box model, where management is co-located with compute workloads.
**FIG. 3** shows a four-core server with management and compute loads distributed across the cores.
**FIG. 4** shows an example of static assignment of CPU cores over time.
**FIG. 5** shows an example of dynamic assignment of CPU cores over time

### Detailed Description

The present disclosure describes how to perform dynamic allocation of resources based on the fact that the resource requirements for management functions are highest at system initialization, and tend to go down as the system approaches steady state. Conversely, the resource requirements for productive workloads are zero initially and grow as services are activated.

For purposes of this application the term "targeted resources" is understood as resources that are intended for use by productive workloads, but which may be used by management workloads until needed for productive workloads.

Here is an example of how resources are dynamically assigned over time. Please refer to **FIG. 5****,** which illustrates the allocation of one resource, CPU cores. The allocation of other resources follows a similar model, but is omitted for clarity. See **Appendix B** for details of the configuration and commands.

Step 1: Operating system and management initiated at time T0.
- At time T0, 501-504 show cores 1-4 are initially idle

Step 2: Targeted resources are reserved.
- Linux kernel option isolcpus is used to reserve targeted resources and prevent the operating system from allocating them.
- At time T1, 511-514 shows cores 1-4 allocated for management for initial startup tasks. Examples of the initial startup tasks include initial bootup, diagnostics, hardware and software initialization and startup of the operating system and management applications. While the work at time T1 could be deemed management workloads as it is not productive workloads, the startup activities are different from the later management workloads and it is helpful to simply designate them as startup.

Step 3: Operating system and management startup complete.
- At time T2 and later, the startup phase is complete. 521 shows management on Core 1 while 522-524 show cores 2-4 are idle.
- At time T3 and later, management workloads are able to access idle targeted resources (532-534), where previously they were restricted to a fixed pool of reserved resources (531).

Management process takes control of resources targeted (not reserved) for productive workloads (532-534), which may be borrowed until activated for productive workloads (532).

Step 4: Activation of productive workloads.
- Activation is based on an internal configuration or external command
- All activation processing is performed by the management workload
- At time T3, management process instantiates productive workload "Productive-1" using targeted resources on Core 2 (532). Note that the management workload may continue to use Core 2 (532) until productive workload "Productive-1" is activated. Thus, for a period of time Core 2 is handling management workloads and the onset of "Productive-1" workloads.
- Remember that the time periods in both **FIG. 4** and **FIG. 5** are to show sequencing and to allow discussion and the time periods are not of equal length. Thus, time period T3 in **FIG. 4** may be significantly longer than time period T3 in **FIG. 5****.** There is a fair amount of management workloads to set up a productive task before the productive task can start to handle productive workloads. In **FIG. 4****,** only reserved Core 1 is available to help with management workloads after the startup of the cores in time T1. Thus the work to set up productive task identified as Productive-1 in **FIG. 4** at 432 is handled solely by Core 1 at 431. In stark contrast, at time T3 in **FIG. 5****,** the management workloads to get Productive-1 up and going can be handled by Core 1, Core 3, Core 4, and for at least a while by Core 2. Depending on the capacity of the system to share the workload to get Productive-1 running, several cores may assist rather than just reserved Core 1.
- Instantiation includes allocation of resources. These resources are removed from the pool of resources the management workload is allowed to use. In the implementation described in **FIG. 5****,** the removal does not occur until the productive workload "Productive-1" is actually using the assigned resources. Other implementations may make the change from available for use for management workloads to exclusively limited to productive workloads using slightly different rules.
- At time T4 productive workload "Productive-1" is activated. Resource 542 is removed from the pool that management workloads may access. Management workloads may access idle targeted resources 543 and 544 in addition to reserved core 541. In this context, activated means the workload is running in the targeted core. This occurs after the workload has been mapped to the targeted core and is ready to run.
- At time T5 productive workload "Productive-2" (requiring 2 CPU cores) is activated while initially sharing resources on cores 3 and 4 with management workloads (553 and 554). Once "Productive-2" is activated at time T6, resources (563 and 564) are removed from the pool that management workloads can access, and management workloads are confined to Core 1 (561) as all of the targeted resource cores (Core 2, Core 3, and Core 4) are now in use for productive workloads.
- Again, the time periods (T0-T8) are not drawn to indicate scale and the time to add Productive-2 in **FIG. 5** is much quicker than adding the same productive task - Productive-2 in **FIG. 4** as the system in **FIG. 4** must perform all management workloads, including starting Productive-2 in reserved Core 1. In contrast, in **FIG. 5****,** the system can expedite the process of starting Productive-2 as the management workloads to start Productive-2 and any other management workloads needed during that same time period may be allocated to a mix of Core 1, Core 3, and Core 4.

Step 5: Deactivation of productive workloads.
- Deactivation is based on an internal configuration or external command.
- All deactivation processing is performed by the management workload.
- At time T7 productive workload "Productive-1" is stopped. All resources and infrastructure are released and available for the next productive workload or by use of management workload (672) until needed by a productive workload e.g. productive workload "Productive-3" at time T8 (582). Core 1 and Core 2 in **FIG. 5** can work to handle the management workloads to set up Productive-3 and other management workloads that need to happen at the same time. This can lead to a reduction of time to start Productive-3 in **FIG. 5** as compared to **FIG. 4****.**

### Comparison with Standard Linux Scheduling.

Above it was noted that allowing standard Linux scheduling to spread the management workload across all available resources would not be a viable solution as each change to the resource allocation requires a context switch and/or a virtual machine (VM) migration. Within a VNF hosting environment, this is not acceptable because VNFs will typically require dedicated resources to achieve performance requirements. A context switch or VM change will stop the VNF and cause a temporary network outage that will impact the end user service.

Now that the teachings of the present disclosure have been expressed, the differences and advantages over simply allowing standard Linux scheduling may be addressed with more specificity.

The teachings of the present disclosure are superior to standard Linux scheduling as a compute system set to use standard Linux scheduling would continue to use standard Linux scheduling after productive tasks were started and the subsequent stopping of productive tasks to handle a few management workloads and then resuming the productive workloads would be inefficient as each context switch or VM change will stop the VNF and cause a temporary network outage that will impact the end user.

Thus the teachings of the present disclosure enable extended blocks of time that a targeted resource is not being used for productive workloads to be repurposed for management workloads but then does not disturb targeted resources when they are in use for productive workloads. So there is harvesting of extended periods of idle time on a resource without frequent recurring losses from starting and stopping a productive task to fit in a few management workloads.

The dynamic allocation described above provides large and beneficial improvements in startup time. Here is a comparison using the "Newton" release of OpenStack on a server with a 4 core Atom processor creating a Heat stack including a VM with four virtual ports.

**Atom server info:**

| | |
|---|---|
| [root@VSE179 ∼]# lscpu | |
| Architecture: | x86_64 |
| CPU op-mode(s): | 32-bit, 64-bit |
| Byte Order: | Little Endian |
| CPU(s): | 4 |
| On-line CPU(s) list: | 0-3 |
| Thread(s) per core: | 1 |
| Core(s) per socket: | 4 |
| Socket (s) : | 1 |
| NUMA node(s): | 1 |
| Vendor ID: | GenuineIntel |
| CPU family: | 6 |
| Model: | 77 |
| Model name: | Intel(R) Atom(TM) CPU C2558 @ 2.40GHz |
| Stepping: | 8 |
| CPU MHz: | 2400.000 |
| BogoMIPS: | 4800.19 |
| Virtualization: | VT-x |
| Lid cache: | 24K |
| L1i cache: | 32K |
| L2 cache: | 1024K |
| NUMA node0 CPU(s): | 0-3 |

The teachings of the present disclosure were tested using processes to start up compute resources using ADVA™ Optical Networking Ensemble Connector virtualization platform. See https://www.advaoptical.com/en/products/network-virtualization/ensemble-connector for general information on Ensemble Connector.

Using the 17.1.1 release of Ensemble Connector with static resource allocation as described in connection with **FIG. 4****,** the process of starting the productive workloads took 38 minutes. This was the time from bootup (T0) to productive loads running (T4).

Using the 17.1.2 release of Ensemble Connector with dynamic resource allocation of four cores (one reserved and three targeted) as described in connection with **FIG. 5****,** the process took only 17.5 minutes to reach the same end point (T6), reducing the required time by more than 50%. Note that because of additional steps in **FIG. 5****,** the initial loading of all targeted cores with productive tasks happens at time period T6 in **FIG. 5** which corresponds to loading all targeted cores with productive steps at time period T4 in **FIG. 4****.** As the time periods mark stages and not time increments, T6 is achieved in **FIG. 5** in less than half the time to achieve T4 in **FIG. 4****.**

Thus, the switch to making cores as targeted for productive workloads but available for management workloads when not activated for productive workloads as shown in **FIG. 5** leads to a much quicker initialization of the compute platform than rigidly reserving cores for productive workloads after T1 startup tasks as shown in **FIG. 4****.**

It bears repeating that the tremendous reduction in time to reach the same end point (starting the productive workloads) was accomplished by harnessing the teachings of the present disclosure to manage a single scarce resource (CPU cores). It also bears noting that in order to provide clean numbers, the milestone was chosen relatively early in the process and does not reflect additional savings that can be achieved when targeted resources are deactivated from use for productive workloads and harnessed for management workloads until again used for productive workloads.

As noted, the teachings of the present disclosure can be applied to other sets of finite resources to allow resources to be targeted for productive workloads but available after the T1 startup for use for management workloads until activated for use with productive workloads. Examples include but are not limited to management of random access memory, non-volatile storage, or other scarce resources.

ALTERNATIVES AND VARIATIONS.

### Entire Core Immediately Allocated to Productive Workloads.

As noted above, it is preferred to allow a targeted core that is being shifted to productive workloads to displace the management workloads as the productive workload activity increases in the targeted core. See targeted core 532 at T3 and targeted cores 553 and 554 at T5. This is not an absolute requirement of the teachings of this disclosure and one could implement a system that enjoys many of the advantages of the present disclosure by shutting down an entire targeted core from additional use by management workloads and then making the entire targeted core available for productive workloads even though there may be some period of time when the productive tasks are ramping up and some of the targeted core is not in use.

The ability to use an entire targeted core by management workloads when the targeted core would otherwise be idle is thought to be much more important than the smaller gains from allowing a partial use of a targeted core by management workloads during the relatively brief periods when productive workload use is ramping up.

### Management Workloads Only Until First Use for Productive Workloads.

The present disclosure teaches that a targeted resource such as a targeted core may be temporarily borrowed to handle management workloads to reduce the time for preparing a productive task or other management workloads by providing additional resources to the management workloads at the initialization of the compute resource as this is one of the heaviest uses of management workloads and the productive workloads are not yet active.

The present disclosure further teaches that when a productive workload ceases operation on a targeted resource such as a targeted core, then that targeted resource while idle will again become available for use by management workloads. See for example targeted core 572 (Core 2 at time T7). This latter feature is not a requirement of the teachings of the disclosure. One could enjoy much of the benefit of the present disclosure by allowing management workloads on a targeted resource only until the targeted resource is first mapped to a productive workload. Then the targeted resource is not available to management resources until the system is shut down and restarted. Thus Core 2 at time T7 would be idle after the end of Productive task-1 and before the start of Productive task-3.

### Sharing a Targeted Resource During Shutdown of a Productive Task.

**FIG. 5** illustrates the sharing of a targeted resource between ongoing management workload activities which is gradually displaced as a productive task ramps up to use the targeted resource for productive workloads. See cores 532, 553, and 554.

A variation on this teaching would be to allow management workloads to begin to use a portion of a targeted resource as a productive task with productive workloads is shutting down rather than waiting for the entire targeted resource to become idle before allowing the idle targeted resource to be used for management workloads.

As the time to ramp up a productive task is often longer and more gradual than the process to shut down a productive task, one may implement the system to allow sharing only on ramp up, instead of both on ramp up and shut down. For the sake of completeness, it would be possible to allow sharing on only the shutdown of a productive task and not on the ramp up of the productive task but this may not be a common election.

One of skill in the art will recognize that some of the alternative implementations set forth above are not universally mutually exclusive and that in some cases additional implementations can be created that employ aspects of two or more of the variations described above. Likewise, the present disclosure is not limited to the specific examples or particular embodiments provided to promote understanding of the various teachings of the present disclosure. Moreover, the scope of the claims which follow covers the range of variations, modifications, and substitutes for the components described herein as would be known to those of skill in the art.

The legal limitations of the scope of the claimed invention are set forth in the claims that follow and extend to cover their legal equivalents. Those unfamiliar with the legal tests for equivalency should consult a person registered to practice before the patent authority which granted this patent such as the United States Patent and Trademark Office or its counterpart.

### APPENDIX A: DETAILS OF STATIC RESOURCE ALLOCATION

Ensemble Connector is an example of a software platform that implements embedded cloud on servers with limited resources. This section describes the static approach to resource allocation in the Ensemble Connector software.

In software releases prior to 17.1.2, Ensemble Connector has provided static resource allocation via the grub command line "isolcpus" option and maestros.conf VNF core allocation configuration.

### A.1: Management Workloads

The Linux kernel is instructed to not include particular logical cores (productive workload resources) in its scheduling in order to prevent management workloads from being scheduled to run on designated productive workloads resources. Payload control processes (control processes == specific management workloads == OpenStack controller) are restricted to the management resources by using Linux cgroups to instruct Linux on which resource the workload is allowed to use. Ensemble Connector uses Docker containers to help facilitate the configuration and control of Linux cgroups.

### A.2: Configuring isolcpus

Isolcpus is a grub kernel command line argument for controlling the Linux kernel.

Configured via /etc/default/grub. Example:
GRUB_CMDLINE_LINUX=" vconsole.keymap=us vconsole.font=latarcyrheb-sun16 rhgb quiet isolcpus=1,2,3 console=ttyS0,115200n8 console=ttyUSB0, 115200n8 clocksource=hpet"

The commands above instruct the kernel not to use cores 1, 2, and 3, leaving core zero available. Changes take effect on system reboot.

### A.3: Payload control processes

Ensemble incorporates an OpenStack Controller to help manage instantiation of productive workloads. OpenStack Controller processes are confined to a single cgroup by placing them in a container and run using Docker.

The OpenStack controller container is restricted to the management resources by telling Docker which logical cores the container is allowed to run on.

See "docker --cpuset-cpus=<mgmt core>"

### A.4: Interrupts

System interrupts are restricted to or prevented from being handled by designated logical cores via the kernel smp_affinity settings.
In Linux smp_affinity is configured via the /proc filesystem
/proc/irq/default_smp_affinity
/proc/irq/<irq number>/smp_affinity

### A.5: Ensemble Connector Configuration

Here is an example the maestros.conf file in Ensemble Connector. Note that maestros.conf is an INI style configuration file.
[cores]
vnf_cpu_mask=0x0E
mgmt_cpu_mask=0x01
datapath_cpu_mask=0x01
datapath_slowiface_cpu_mask=0x01
datapath_kni_cpu_mask=0x01
[ctrl_container]
ctrl_container_memory=6000M
ctrl container core allocation=0

Notes:
- vnf_cpu_mask - tells Connector which cores are available as targeted resource
- mgmt._cpu_mask - tells Connector where management should be running (used in conjunction with isolcpus)
- ctrl_container_core_allocation - tells Connector where to run OpenStack controller
- ctrl_container_memory - indicates the maximum amount of RAM the OpenStack controller is allowed to consume

### APPENDIX B: DETAILS OF DYNAMIC RESOURCE ALLOCATION

Ensemble Connector is an example of a software platform that implements embedded cloud on servers with limited resources. This section describes the dynamic approach to resource allocation in the Ensemble Connector software.

With dynamic allocated workloads, management and productive workload resources are still configured by users. However, unused and/or underutilized productive workload resources are utilized for management workloads.

### B.1: Management Workloads

The Linux kernel is instructed to not include particular logical cores (productive workload resources) in its scheduling in order to prevent management workloads from being scheduled to run on resources targeted for productive workloads. Productive workload control processes (control processes == specific management workloads == OpenStack controller) are restricted to the management resources by using Linux cgroups to instruct Linux on which resource the workload is allowed to use. Ensemble Connector uses Docker containers to help facilitate the configuration and control of Linux cgroups.

With the 17.1.2 release, unused/underutilized resources targeted for productive workloads are used for management workloads.

### B.2: Configuring isolcpus (no change)

Isolcpus is a kernel command line argument for controlling the Linux kernel.

Configured via /etc/default/grub. Example:
GRUB_CMDLINE_LINUX=" vconsole.keymap=us vconsole.font=latar-cyrheb-sun16 rhgb quiet isolcpus=1,2,3 consoie=ttyS0, 115200n8 console=ttyUSB0,115200n8 clocksource=hpet"

Changes take effect on system reboot.
To date only the OpenStack Controller workload is being moved around, but other management workloads could be allowed to utilize resources targeted for productive workloads. Other processes may be targeted to particular resources using cgroups or individually via the Linux 'taskset' command.

### B.3 Payload Control processes (was static, now dynamic)

Ensemble incorporates an OpenStack Controller to help manage instantiation of productive workloads. OpenStack Controller processes are confined to a single cgroup by placing them in a container and run by Docker.

Workloads are restricted via the "docker -cpuset-cpus" functionality. Docker also provides the ability to dynamically change the restriction set by using the update command. Example:
docker update --cpuset-cpus <coreset> <container ID>

### B.4 Interrupts (could be dynamically updated)

System interrupts are restricted to or prevented from being handled by designated logical cores via the kernel smp_affinity settings.

In Linux smp_affinity is configured via the /proc filesystem
/proc/irq/default_smp_affinity
/proc/irq/<irq number>/smp_affinity

### B.5: Payload Resources

Payload resource utilization is monitored via virsh, a command line interface tool for managing guests and hypervisors.
- virsh list: Provides a list of guests, i.e. VMs and their operational state.
- virsh vcpuinfo: Provides a list of cores in use by a particular guest, i.e. VM

### B.6: Ensemble Connector Configuration (no change)

Here is an example the maestros.conf file in Ensemble Connector. Note that maestros.conf is an INI style configuration file.
[cores]
vnf_cpu_mask=0x0E
mgmt_cpu_mask=0x01
datapath_cpu_mask=0x01
datapath_slowiface_cpu_mask=0x01
datapath_kni_cpu_mask=0x01
[ctrl_container]
ctrl_container_memory=6000M
ctrl_container_core_allocation=0

Notes:
- vnf_cpu_mask - tells Connector which cores are available as targeted resource
- mgmt._cpu_mask - tells Connector where management should be running (used in conjunction with isolcpus)
- ctrl_container_core_allocation - tells Connector where to run Openstack controller
- ctrl_container_memory - kind of related. Indicates the maximum amount of RAM the Openstack controller is allowed to consume

## Claims

1. A method for allocating a fixed number of resources of a first type within a compute platform; the method comprising:
allocating a first set of at least one resource of the first type as reserved resources for use by management workloads;
allocating a second set of at least one resource of the first type as targeted resources, the targeted resources in the second set of at least one resource available for management workloads when not activated for use by productive workloads;
assigning a set of management workloads to a first targeted resource within the second set of at least one resource while the first targeted resource is not activated for use by productive workloads;
processing management workloads on the first targeted resource; and
responding to an opportunity to use the first targeted resource for productive workloads instead of continued use for management workloads by:
ceasing processing of management workloads on the first targeted resource; and
activating the first targeted resource for use by productive workloads and making the first targeted resource unavailable for management workloads until deactivated.

2. The method of claim 1 where the method of deactivating the first targeted resource for use by productive workloads does not occur until the compute platform is restarted.

3. The method of claim 1 or 2 wherein activating the first targeted resource for use by productive workloads and making the first targeted resource unavailable for management workloads until deactivated includes an intermediate state wherein the first targeted resource is being used for both productive workloads and management workloads as a percentage of the first targeted resource that is used by productive workloads ramps up.

4. The method of any of claims 1 to 3 wherein activating the first targeted resource for use by productive workloads and making the first targeted resource unavailable for management workloads until deactivated includes an intermediate state wherein the first targeted resource is being used for both productive workloads and management workloads as a percentage of the first targeted resource that is used by productive workloads ramps down as a productive task using the productive workloads is deactivated.

5. The method of any of claims 1 to 4 wherein at least one of the resource of the first type is virtual.

6. The method of any of claims 1 to 5 wherein at least one resource of the first type is physical.

7. The method of any of claims 1 to 6 wherein at least one resource of the first type is a physical CPU core.

8. The method of any of claims 1 to 7 wherein at least one resource of the first type is a logical CPU core.

9. The method of any of claims 1 to 8 wherein at least one resource of the first type is a virtual CPU core.

10. The method of any of claims 1 to 9 wherein at least one resource of the first type is random access memory.

11. The method of any of claims 1 to 10 wherein at least one resource of the first type is non-volatile storage.
